# EUROPÄISCHE PATENTSCHRIFT

(11) **EP 1 203 497 B1**
(45) Veröffentlichungstag und Bekanntmachung des Hinweises auf die Patenterteilung: **09.04.2008**
(21) Anmeldenummer: 00962220.0
(22) Anmeldetag: 16.08.2000
(51) Int. Cl.: H04Q 3/00, H04M 3/42

(54) **VERFAHREN ZUR AKTUALISIERUNG VON TEILNEHMERBEZOGENEN DATEN EINES TELEKOMMUNIKATIONSNETZES**
METHOD FOR UPDATING SUBSCRIBER-RELATED DATA IN A TELECOMMUNICATION NETWORK.
PROCEDE D'ACTUALISATION DE DONNEES CONCERNANT UN ABONNE D'UN RESEAU DE TELECOMMUNICATIONS

(30) Priorität: 18.08.1999 DE 19939057
(43) Veröffentlichungstag der Anmeldung: 08.05.2002
(73) Patentinhaber: Nokia Siemens Networks GmbH & Co. KG, 81541 München (DE)
(72) Erfinder: LÖBIG, Norbert, D-64291 Darmstadt (DE)
(86) Internationale Anmeldenummer: PCT/DE2000/002763
(87) Internationale Veröffentlichungsnummer: WO 2001/013652

(56) Entgegenhaltungen:
- WO-A-99/33007
- US-A- 5 390 335

## Beschreibung

Die Erfindung betrifft ein Verfahren gemäß dem Oberbegriff von Patentanspruch 1.

Orts- und Fernvermittlungsstellen haben i.a. Zugriff auf externe oder integrierte Einrichtungen zur Bereitstellung von Ansagen. Solche Ansagen können einfache Systemansagen (Beispiel: 'Kein Anschluß unter dieser Nummer') oder individuell aus einzelnen Fragmenten zusammengesetzte Ansagen sein (Beispiel: 'Die Rufnummer des Teilnehmers hat sich geändert, die neue Rufnummer ist 123456'). Im Zusammenhang mit der Abwicklung von Intelligent Network Features (Beispiel: Calling Card Service) oder zur Steuerung von Teilnehmerleistungsmerkmalen durch den Teilnehmer (Beispiel: Sperre abgehender Verbindungen) werden mit Hilfe von Ansagetechnik und DTMF/Spracherkennung sogar vollständige Dialoge zur Identifizierung und. Aktivierung der gewünschten Funktion angeboten.

Waren die hierfür notwendigen Ansage- und Spracherkennungsdatensätze in der Vergangenheit nur sehr seltenen Veränderungen unterworfen, so hat der Wettbewerb der Netzbetreiber heute dazu geführt, daß die Häufigkeit von Änderungen dieser Datensätze stark zugenommen hat:

So müssen Ansagen aktuelle und informative Inhalte besitzen. (Beispiel: Aktuelle Werbeansage des Unternehmens für Anrufer, die auf eine freie Leitung des Bearbeitungszentrums dieses Unternehmens warten). Dialoge müssen für neue Services schnell bereitgestellt werden können, womit sich häufiger Änderungsbedarf hinsichtlich des Ansagenanteils und hinsichtlich der Schlüsselwortspeicher des Spracherkenners zwangsläufig ergibt. Ebenso müssen täglich aktuelle Informationen für den Faxabruf einer großen Zahl gleichzeitig anrufender Teilnehmer bereitgestellt werden (Beispiel: Fernsehsendungen mit Zusatzinformationen per Faxabruf).

Um ein Höchstmaß an Flexibilität zu erreichen, können beim Stand der Technik die Netzbetreiber sowie ihre Kunden die ihnen zugeordneten Datenbestände mit Hilfe eigener Infrastruktur (z. B. PC-Umgebung des Kunden) und ohne Einrichtungen des Vermittlungsnetzes generieren und anschließend (z. B. mittels ISDN-Wählverbindung oder via Internet) den Ansage- und Dialogeinrichtungen des Fernmeldenetzes zuführen. Beispielsweise kann so der Großkunde eines Netzbetreibers seine Ansage dadurch aktualisieren, daß er die auf seinem PC erstellte Ansage mit neuestem Werbeinhalt über eine Wählverbindung zu einer Ansageeinrichtung überträgt oder die neue Ansage einfach auf die Ansageeinrichtung mit Hilfe eines Telephonendgerätes aufspricht).

Um derartige, aus Einrichtungen des Fermeldenetzes bereitgestellte Informationen hinreichend blockierungsfrei für einen breiten Abruf bereitstellen zu können, werden diese zugleich von vielen, auch örtlich verteilten Einrichtungen des Fernmeldenetzes angeboten. Die für einen aktuellen Verbindungswunsch z. B. ursprungsabhängig zugeordnete Vermittlungsstelle zur Bereitstellung von Ansage, Dialog, oder Fax-Abruf wird i.a. auf Grund einer einheitlichen, netzweit gültigen Rufnummer erreicht und durch Intelligent Network Funktionen umgesetzt. Dies kann z. B. nach dem Gesichtspunkt der kürzesten Wegeführung der Verbindung zwischen Teilnehmer und der ausgewählten, die gewünschte Ansage-, Fax-, Dialog-Funktion bereitstellenden Vermittlungsstelle erfolgen.

Die voranstehend genannten Aktualisierungsvorgänge betreffen die in diesen Einrichtungen gespeicherten Datenbestände. Dem Aktualisierungsvorgang wird eine Berechtigungsprüfung über eine persönliche Identifikationsnummer (PIN) ebenso vorausgehen wie ein zugeordneter Dialog mit dem Benutzer. Nach der Aktualisierung kann eine ebenfalls bedienergeführte Probeaktivierung (z. B. Abhören der Ansage oder Probeaktivierung des Spracherkenners für neue Schlüsselworte) erfolgen. Hiernach kann eine netzweite Aktivierung des neuen Datenbestandes eingeleitet werden. Spätestens zu diesem Zeitpunkt ergibt sich die Notwendigkeit, die aktualisierten Daten allen, dem jeweiligen Netzkunden zugeordneten Ansage-, Faxabruf- und Dialogmaschinen in der gleichen Vermittlungsstelle wie auch netzweit verfügbar zu machen.

Damit ergibt sich folgendes technische Problem:

Wie kann der auf einer Ansage-, Faxabruf oder Dialogeinrichtung einer Vermittlungsstelle zum Zwecke der Probeaktivierung eingespielte Datenbestand eines einzelnen Netzkunden allen, diesem Kunden zugeordneten Ansage-, Faxabruf und Dialogeinrichtungen in der gleichen Vermittlungsstelle und im gesamten Netz zur Verfügung gestellt werden, ohne daß der Kunde die beteiligten Einrichtungen explizit adressieren muß und ein sequentielles Übertragen des aktualisierten Datenbestandes kundenseitig durchführen und überwachen muß. Ferner besteht hierbei das Problem, daß sich Fehlersituationen des Netzes (z. B. Ausfall einer Vermittlungsstelle, einer beteiligten Einrichtung) oder Veränderungen der Netztoplogie (z. B. Erweiterungen der Ansagekapazität in den Vermittlungsstellen) auf die Bedienerschnittstelle des Ansage-, Faxabruf- und Dialogkunden niederschlagen können und damit eine spezielle Behandlung erforderlich machen. Weiterhin besteht das Problem, daß zeitliche Einschränkungen (z. B. Änderungen nur zu bestimmten Tageszeiten) oder Abhängigkeiten zu dem Netzbetreiber (z.B. Servicepersonaleinsatz) entstehen und schließlich die Gefahr von Datenverlusten gegeben ist.

Beim Stand der Technik haben sich zur Lösung dieses Problems die Installation von Service-Einrichtungen herauskristallisiert. Diese werden als Intelligent Peripherals IP bezeichnet. Sie werden entweder in die Netzknoten oder in die Peripherie der Vermittlungsstellen integriert.

Problematisch an einer derartigen Lösung ist allerdings der Umstand, daß Änderungen, die ein Netzkunde an seinem Datenbestand machen möchte, ausschließlich vom Netzbtreiber in das gesamte Netz eingespielt wird, da nur der Netzbetreiber die für den jeweiligen Netzkunden relevanten Vermittlungsstellen und die in diesen enthaltene Vielzahl peripherer Einrichtungen mit integrierter IP-Funktion zu adressieren in der Lage ist. Hierdurch entsteht Zeitverzug, Verlust an Aktualität und Abhängigkeit vom Netzbetreiber.

Der Erfindung liegt die Aufgabe zugrunde, einen Weg aufzuzeigen, wie eine einfache, zuverlässige, zeitgerechte und bedienerfreundliche Aktualisierung von Informationen kundenseitig durchgeführt werden kann.

Die Erfindung wird, ausgehend vom Oberbegriff von Patentanspruch 1, durch die im kennzeichnenden Teil angegebenen Merkmale gelöst.

Vorteilhaft an der Erfindung ist insbesondere, daß administrativ sichergestellt wird, daß für jeden in einer der Service-Einrichtungen gespeicherten Datensatz eine Liste der Adressen der weiteren Service-Einrichtungen geführt wird, welche ebenfalls diesen Datensatz führen, daß jeder Datensatz netzweit einheitlich ansprechbar ist, und daß eine vom Kunden initiierte Änderung des Datensatzes auf genau einem der den Datensatz führenden Service-Einrichtung erfolgt und diese die Änderung netzweit den weiteren Service-Einrichtungen mitteilt .Damit ist der Vorteil verbunden, daß Änderungen der Ansage-, Fax-, Dialog-Funktionen nicht nur vom Netzbetreiber , sondern insbesondere vom Kunden selbst vorgenommen werden können.

Vorteilhafte Weiterbildungen der Erfindung sind in den Unteransprüchen vorgesehen.

Die Erfindung wird im folgenden anhand eines figürlich dargestellten Ausführungsbeispieles näher erläutert.

Es zeigen:
- Fig 1: die typische Architektur eines Kommunikationssystems
- Fig 2: eine Architektur einer in eine Vermittlungsstelle integrierten Service-Einrichtung
- Fig 3: Durchschaltevorgänge und interne Kommunikation zwischen integrierten Service-Einrichtungen.

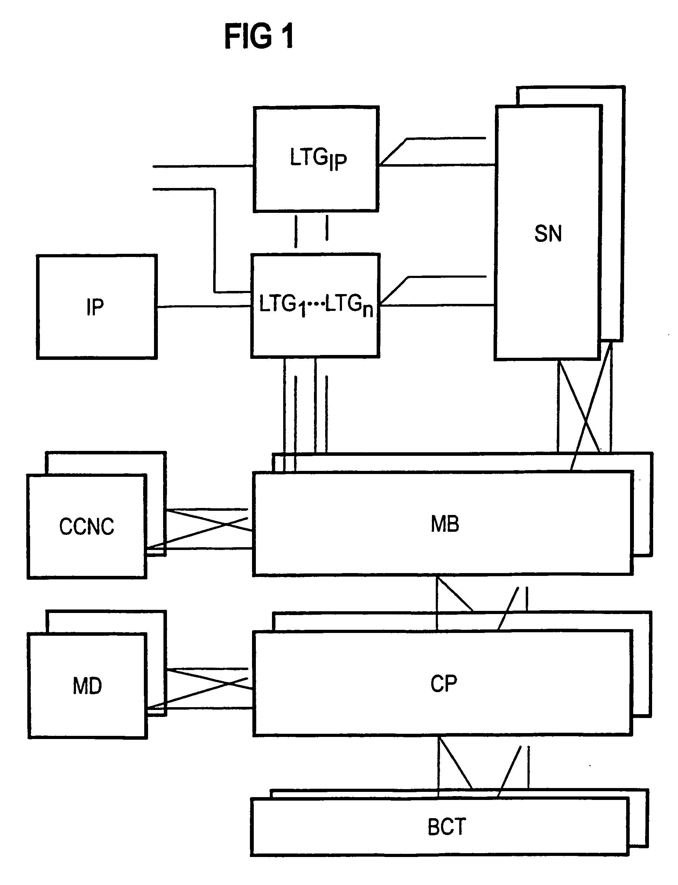

In Fig. 1 ist die typische Architektur eines mit ungedoppelten peripheren Einrichtungen ausgebildeten Kommunikationssystems aufgezeigt. Ein derartiges Kommunikationssystem besteht aus peripheren Einrichtungen LTG₁...LTGₙ (Anschlußeinrichtungen für Teilnehmer oder Leitungen), einer zentralen Rechnerplattform CP, einer Nachrichtenverteileinrichtung MB und weiteren, zentralen Einheiten (Koppelfeld SN, Protokollabschlußeinrichtungen CCNC (z. B. #7), Hintergrundspeicher MD, Bedieneinrichtungen BCT).

Die peripheren Einrichtungen LTG₁...LTGₙ erfüllen wesentliche, an die Sprachkanäle der peripheren Einrichtung gebundene vermittlungstechnische Aufgaben. Sie enthalten daher vermittlungstechnische, betriebstechnische und administrative Programme sowie die der Einrichtung zugehörigen Dateninformationen wie Anschlußlage, Signalisierung, Berechtigungen, Rufnummern, individuelle Charakteristika von Verbindungsleitungen und Teilnehmeranschlüssen sowie Ausbauzustand und Konfiguration der peripheren Einrichtung. In eine der peripheren Einrichtungen LTG_{IP} sind als Teil einer integrierten Lösung Einrichtungen IP integriert, die die Funktion von Service-Einrichtungen aufweisen.

Die zentrale Rechnerplattform CP dient der koordinierenden Steuerung des Verbindungsauf- und -abbaus sowie der Reaktionen auf administrative und fehlerbedingte Konfigurationsveränderungen. Die peripheren Einrichtungen LTG₁...LTGₙ sind über das Nachrichtenverteilsystem MB untereinander und mit der gemeinsamen Rechnerplattform CP verbunden. Die weiteren zentralen Systemkomponenten stellen dem Vermittlungssystem Spezialfunktionen z. B. für die Durchschaltung der Sprachkanäle, die Bearbeitung der Signalsierungsprotokolle, die Realisierung der Betreiberschnittstelle oder die Speicherung von Massendaten zur Verfügung.

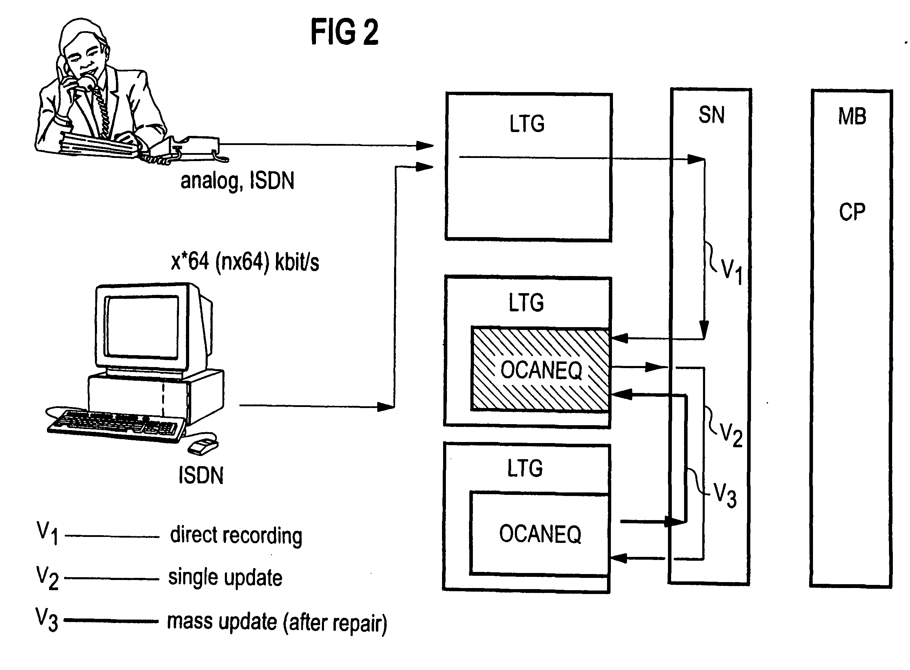

In Fig. 2 ist aufgezeigt, wie die Service-Einrichtungen IP in einer peripheren Einrichtung LTG_{IP} des Kommunikationssystems eingefügt sind. Hierbei sind die Service-Einrichtungen IP als integrierte Ansageeinrichtungen OCANEQ ausgebildet, mit deren Hilfe die Aktualisierung einer weiteren integrierten Ansageeinrichtung OCANEQ sowie das Aufsprechen von Kundenansagen vorgenommen wird. Weiterhin sind in der peripheren Einrichtung LTG_{IP} Ansage-, Dialog- und Spracherkennungsfunktionen integriert. Gemäß Fig. 2 wird zunächst von einem Teilnehmer über eine analoge oder eine ISDN-Verbindungsleitung ein Verbindungsaufbau V₁ zu einer integrierten Ansageeinrichtung OCANEQ gesteuert (Direct Recording). Der Verbindungsaufbau kann ebenso über einen PC gesondert durchgeführt werden. Ist die Aufsprache des Ansagetextes auf die integrierte Ansageeinrichtung OCANEQ abgeschlossen, wird von dieser ein weiterer Verbindungsaufbau V₂ zu einer weiteren integrierten Ansageeinrichtung OCANEQ einer weiteren peripheren Einrichtung LTG aufgebaut (Single Update). Die dort angeordnete integrierte Ansageeinrichtung OCANEQ wird mit dem Ansagetext aktualisiert. Falls die ursprüngliche integrierte Ansageeinrichtung OCANEQ ausgefallen ist, läßt sich über einen weiteren Verbindungsaufbau V₃ der übergebene Ansagetext wieder beim Hochlauf in die ursprüngliche integrierte Ansageeinrichtung OCANEQ zurückspeichern (Mass Update after repair).

In einer Ausgestaltung der Erfindung ist vorgesehen, die Service-Einrichtungen als externe Service-Einrichtungen IP oder externe Intelligent Peripherals IP - im folgenden kurz IP genannt - in die Vermittlungsknoten zu integrieren.

Erfindungsgemäß wird nun vorgesehen, Ansage-, Faxabruf- und Dialogkapazitäten des Fernmeldenetzes zu administrieren. Insbesondere wird hierbei eine Zuordnung getroffen zwischen der spezifischen Kapazität und dem diese Kapazität nutzenden Kunden. Die die entsprechenden Kundenansagen, Faxabrufdaten oder Spracherkennungsdaten bereitstellenden peripheren Einrichtungen LTG_{IP} der Kommunikationssysteme oder externen Intelligent Peripherals IP werden im Rahmen der Adminstration dieser Netzfunktionen informiert hinsichtlich der dem jeweilig zu speichernden Datensatz zugehörigen Liste aller weiteren integrierten oder externen Intelligent Peripherals IP des Netzes, die diesen Datensatz zur Verfügung halten. Hierbei wird der Datensatz durch einen netzeinheitlichen Index (z. B. die Fragmentnummer des Ansagefragmentes) identifiziert. Ferner wird die Liste der weiteren internen oder externen Intelligent Peripherals IP aus den netzeinheitlichen Adressen der IPs selbst bestehen. Generell kann dies eine Liste von netzweit gültigen Rufnummern sein, im Falle von integrierten IPs kann diese auch aus den vermittlungsstellenintern gültigen Anschlußlagen der integrierten IPs bestehen.

Bei Einrichtung eines neuen Datenbestandes,der Löschung eines bestehenden Datenbestandes oder bei Veränderungen der Netztopologie (z. B. Erweiterungen der Einrichtungen im Netz, die die gewünschte Funktion bereitstellen) werden die betroffenen Adreßlisten in den zugeordneten IPs vermittlungsstellenintern und/oder netzweit aktualisiert. Damit hat jeder IP adreßmäßige Kenntnis von den pro kundenspezifischem Datensatz zugeordneten weiteren IPs, die diesen Datensatz halten. Ferner läßt sich der Datensatz für jeden betroffenen IP netzweit einheitlich ansprechen.

Im laufenden Betrieb werden die kundenspezifischen Datensätze nach verschiedensten Gesichtspunkten (z. B. lastabhängig oder ursprungsabhängig) über die den Datensatz haltenden IPs abgerufen. Will ein Kunde seinen Datensatz aktualisieren ( z. B. die heute aktuelle Werbung einspielen), so kann er im Prinzip auf jeden diesen Datensatz haltenden IP zum Zwecke der Aktualisierung, der Probeaktivierung und anschließenden netzweiten Aktivierung des Datensatzes geführt werden. Dies ist insbesondere vorteilhaft im Hinblick auf größtmögliche Verfügbarkeit der Aktualisierungsfunktionalität. Während des Aufspielens des aktualisierten Datensatzes und der Probeaktivierung verbleibt der bisherige Datensatz voll verfügbar im Netz.

Ist der Kunde mit der Probeaktivierung zufrieden, initiiert er die netzweite Aktualisierung des Datensatzes. Dies hat zur Folge, daß der neue Datensatz in dem zum Zwecke der Aktualisierung angesprochenen IP zum Netzabruf verfügbar gemacht wird und der bisherige Datensatz deaktiviert oder gelöscht wird. (Die neu aufgespielte Ansage ist damit im einfachsten Fall über den die Aktualisierung abwickelnden IP bereits verfügbar, wohingegen die weiteren, diese Kundenansage bereitstellenden IPs noch bis zu ihrer Aktualisierung kurzzeitig die bisherige Ansage spielen.)

Die Aufgabe der Aktualisierung der weiteren IPs hinsichtlich des zu aktualisierenden Datensatzes übernimmt nun ein Hintergrundprozeß des zuerst aktualisierten IPs. An Hand der voranstehend genannten Liste der weiteren IPs mit diesem Datensatz baut dieser IP sukzessive temporäre Verbindungswege zu einem weiteren bzgl. des genannten Datensatzes zu aktualisierenden IP auf. Derartige Verbindungswege können Wählverbindungen sein (d.h. im Prinzip ruft ein IP sukzessive alle betroffenen weiteren IPs an) oder vermittlungsstelleninterne Durchschaltungen zwischen integrierten IPs, also Belegungen eines Ports eines betroffenen weiteren IPs.

Ist die Aktualisierung erfolgt, werden derartige Verbindungen wieder abgebaut. Konnte eine Verbindung aufgebaut werden, so ist zur eigentlichen Aktualisierung, also der Übertragung des geänderten Datensatzes in dem weiteren IP eine Kommunikation zwischen den beteiligten IPs erforderlich. Dem angesprochenen IP muß beispielsweise der Index des zu aktualisierenden Datensatzes bekanntgegeben werden. Auch muß eventuell die Art der Aktualisierung mitgeteilt werden (z. B. bei Ansagen eines Überspielen mit Beginn- und Endeton oder protokollgesicherte Übertragung über PPP). Auch muß die Bereitschaft des angesprochenen IP zur Aktualisierung wie auch Erfolgsquittung, Mißerfolgsquittung und Wiederholungsanforderung zwischen den beiden IPs übertragbar sein. Für einen derartigen Nachrichtenaustausch zwischen den betroffenen IPs können netzweit User-to-User Nachrichten und/oder vermittlungsstellenintern über das Nachrichtenverteilsystem geführte Reports zum Einsatz kommen. Kann ein zu aktualisierender IP nicht erreicht werden, was z. B. auf Grund von HW-Ausfällen auftreten kann, so wird der voranstehend genannte Hintergrundprozeß zyklisch erneute Aktualisierungsversuche starten. Eine einmal zu einem weiteren IP durchgeschaltete Aktualisierungsverbindung kann zur Aktualisierung mehrerer Datensätze genutzt werden. Sie wird sinnvollerweise erst dann abgebaut, wenn keine weiteren Datensätze des die Verbindung aufbauenden IPs in Richtung zum weiteren IP zu aktualisieren sind.

Insbesondere wenn lange Datensätze auf eine große Mehrzahl von IPs verteilt werden müssen, kann die Zeit bis zur vollständigen netzweiten Aktualiserung in nicht tolerierbarer Weise ansteigen. In diesem Falle kann die Aktualisierungsverbindung mit größerer Bandbreite versehen werden (z.B. nx64 kbit/s), und/oder es können mehrere weitere IPs gleichzeitig aktualisiert werden.

Ändert ein Kunde seinen Datensatz in kurzem Zeitabstand, so ist es denkbar, daß vor Abschluß der ersten netzweiten oder vermittlungsstelleninternen Aktualisierung des Datensatzes durch einen ersten IP bereits eine weitere Aktualisierung des gleichen Datensatzes durch einen zweiten IP angestoßen wird.

Aus Sicht eines weiteren dritten zu aktualisierenden IP könnte damit der bereits veraltete Datensatz prinzipiell den schon hier bereits gespeicherten neueren Datensatz des Kunden überschreiben auf Grund der gleichzeitig aktiven Hintergrundprozesse zur Aktualisierung dieses Datensatzes. Um derartige Situationen auszuschließen, wird der Zeitpunkt des Einspielens des aktualisierten Datensatzes durch den Kunden als Zeitstempel in den den Datensatz beschreibenden Daten mitgespeichert. Da ein veralteter Datensatz niemals einen neueren Datensatz überschreiben sollte, kann durch Vergleich der zugehörigen Zeitstempel sichergestellt werden, daß nur der tatsächlich aktuelle Datensatz netzweite bzw. vermittlungsstelleninterne Verbreitung findet.

Wird ein ausgefallener IP nach Reparatur wieder verfügbar, kann er die Aktualisierung seiner Datenbestände explizit von einem der weiteren IPs anfordern durch Aufbau einer Aktualisierungsverbindung (eventuell höherer Bandbreite) und entsprechende Kommunikation mit dem weiteren IP.

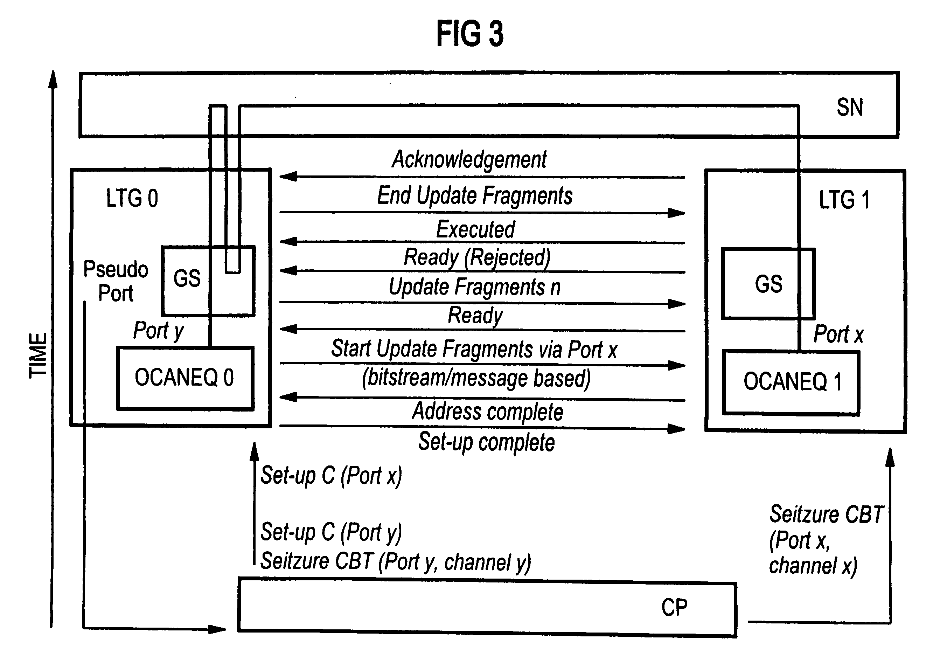

Fig. 3 zeigt die möglichen Durchschaltevorgänge und interne Kommunikation zwischen integrierten IPs zum Zwecke der Aktualisierung von kundenspezifischen Ansagedatensätzen. Insbesondere ist hier aufgezeigt, wie der Verbindungsaufbau V₂ ausgehend von der integrierten Ansageeinrichtung OCANEQ₀ der peripheren Einrichtung LTG₀ zur integrierten Ansageeinrichtung OCANEQ₁ der peripheren Einrichtung LTG₁ durchgeführt wird. Hierbei wird zunächst von der peripheren Einrichtung LTG₀ ein Port an der integrierten Ansageeinrichtung OCANEQ₀ und ein Port an der integrierten Ansageeinrichtung OCANEQ₁ belegt.
Von der zentralen Steuereinrichtung CP werden diese Verbindungswünsche bearbeitet. Die Steuereinrichtung CP übergibt als Ergebnis der peripheren Einrichtung LTG₀ die Meldungen Set-up C (Port x), Set-up C (Port y) sowie Seizure CBT (Port y, channel y). Weiterhin wird von der Steuereinrichtung CP der peripheren Einrichtung LTG₁ die Meldung Seizure CBT (Port x, channel x) übergeben. Von der peripheren Einrichtung LTG₀ wird dann die Meldung Set-up complete der peripheren Einrichtung LTG₁ übergeben. Von dieser wird eine Quittungsmeldung Adress complete der peripheren Einrichtung LTG₀ zugesendet.

Von der peripheren Einrichtung LTG₀ wird sodann die eigentliche Aktualisierung des neu aufgesprochenen Ansagetextes vorgenommen. Hierzu sendet sie der peripheren Einrichtung LTG₁ die Meldung Start Update Fragments via Port x (bitstream/ message based). Diese Meldung wird mit einer Ready-Nachricht quittiert. Hiernach wird von der peripheren Einrichtung LTG₀ die Meldung Update Fragment n der peripheren Einrichtung LTG₁ zugesandt. Dies wird von dieser mit der Nachricht Ready bzw. Rejected quittiert. Abschließend wird eine Meldung Executed der peripheren Einrichtung LTG₀ übermittelt. Schließlich wird von dieser die Meldung End Update Fragments der peripheren Einrichtung LTG₁ übermittelt, welche die Aktualisierungssequenz abschließt, was durch eine Meldung Acknowledgement quittiert wird. Sodann wird die zwischen den integrierten Ansageeinrichtungen OCANEQ₀, OCANEQ₁ über in den jeweiligen peripheren Einrichtungen LTG₀, LTG₁ angeordnete lokale Koppelfelder GS geführte Verbindung V₂ abgebaut.

## Patentansprüche

1. Verfahren zum Aktualisieren von teilnehmerbezogenen Datensätzen, die dezentral in einem Vermittlungsnetz auf einer Mehrzahl von Service-Einrichtungen (IP, OCANEQ) abgelegt sind,
**dadurch gekennzeichnet,**
**daß** administrativ sichergestellt wird, daß für jeden in einer der Service-Einrichtungen (IP,OCANEQ) gespeicherten Datensatz eine Liste der Adressen der weiteren Service-Einrichtungen (IP, OCANEQ) geführt wird, welche ebenfalls diesen Datensatz führen,
**daß** jeder Datensatz netzweit einheitlich ansprechbar ist, und daß eine vom Kunden initiierte Änderung des Datensatzes auf genau einer der den Datensatz führenden Service-Einrichtung (IP, OCANEQ) erfolgt und diese die Änderung netzweit den weiteren Service-Einrichtungen (IP, OCANEQ) mitteilt.

2. Verfahren nach Anspruch 1,
**dadurch gekennzeichnet,**
**daß** die Service-Einrichtungen in der Peripherie eines Kommunikationssystems (OCANEQ) eingebunden sind.

3. Verfahren nach Anspruch 1,
**dadurch gekennzeichnet,**
**daß** die Service-Einrichtungen in die Netzknoten eines Vermittlungsnetzes eingebunden sind.

4. Verfahren nach Anspruch 1 bis 3,
**dadurch gekennzeichnet,**
**daß** die Aktualisierung der Listen im Rahmen der Administrierung des Vermittlungsnetzes bzw. des Kommunikationssystems erfolgt.

5. Verfahren nach Anspruch 1 bis 4,
**dadurch gekennzeichnet,**
**daß** Verfügbarkeit des alten Datensatzes bis zur Initiierung der netzweiten bzw. vermittlungsstellenweiten Aktualisierung durch den Kunden gegeben ist.

6. Verfahren nach einem der vorstehenden Ansprüche,
**dadurch gekennzeichnet,**
**daß** die Aktualisierung des Datensatzes durch die Service-Einrichtungen (IP, OCANEQ), welche zuerst über den neuen Datensatz verfügen, im Rahmen eines Hintergrundprozesses zur sukzessiven Aktualisierung der weiteren Service-Einrichtungen (IP, OCANEQ) erfolgt.

7. Verfahren nach nach einem der vorstehenden Ansprüche,
**dadurch gekennzeichnet,**
**daß** wiederholte zyklische Aktualisierungsversuche des Hintergrundprozesses bei Mißerfolg oder Nichterrreichbarkeit der zu aktualisierenden Service-Einrichtungen (IP, OCANEQ) erfolgen.

8. Verfahren nach einem der vorstehenden Ansprüche,
**dadurch gekenntzeichnet,**
daß die Nutzung temporär bei Bedarf durchgeschalteter Verbindungen zwischen den Service-Einrichtungen (IP, OCANEQ) zur Aktualisierung der Datensätze erfolgt.

9. Verfahren nach einem der vorstehenden Ansprüche,
**dadurch gekennzeichnet,**
**daß** eine aktualisierungsspezifsche Kommunikation zwischen den Service-Einrichtungen (IP, OCANEQ) über ein vermittlungsstelleninternes Nachrichtenverteilsystem (MB) oder netzweit via ISDN User-to-User Signalling oder vermittlungsstellenintern und netzweit via Internet Protokoll erfolgt.

10. Verfahren nach einem der vorstehenden Ansprüche,
**dadurch gekennzeichnet,**
**daß** die Aktualisierung mehrerer Datensätze über eine einmalig geschaltete Aktualisierungsverbindung vorgenommen wird.

11. Verfahren nach einem der vorstehenden Ansprüche,
**dadurch gekennzeichnet,**
**daß** eine Festlegung des Aktualisierungsformates im Rahmen der Kommunikation zwischen den Service-Einrichtungen (IP, OCANEQ) untereinander erfolgt.

12. Verfahren nach nach einem der vorstehenden Ansprüche,
**dadurch gekennzeichnet,**
**daß** eine Reduktion des Aktualisierungszeitbedarfs durch Mehrkanaldurchschaltung und/oder mehrfachen Start des Hintergrundprozesses erreicht wird.

13. Verfahren nach einem der vorstehenden Ansprüche,
**dadurch gekennzeichnet,**
**daß** die Mitführung eines Zeitstempels der Aktualisierung durch den Kunden zur Vermeidung des Überschreibens des aktuellen Datensatzes durch ältere Datensätze im Rahmen mehrerer gleichzeitig aktualisierender Hintergrundprozesse erfolgt.

14. Verfahren nach einem der vorstehenden Ansprüche,
**dadurch gekennzeichnet,**
**daß** eine explizite Aktivierung der Hintergrundprozesse noch in Betrieb befindlicher Service-Einrichtungen (IP, OCANEQ) zur unverzüglichen und schnellen Aktualisierung von nach Reparatur wieder in Betrieb gehenden Service-Einrichtungen (IP, OCANEQ) vorgenommen wird.

## Claims

1. Method for updating subscriber-related data records, which are stored locally in a number of service devices (IP, OCANEQ) in a telecommunications network,
**characterized**
**in that** administrative measures are taken to ensure that, for each data record which is stored in one of the service devices (IP, OCANEQ), a list is kept of the addresses of the other service devices (IP, OCANEQ) which likewise keep this data record,
**in that** each data record can be addressed in a standard manner throughout the network, and in that a change, initiated by the customer, to the data record is carried out on one, and only one, of the service devices (IP, OCANEQ) which keep that data record, and this service device (IP, OCANEQ) reports this change throughout the network to the other service devices (IP, OCANEQ).

2. Method according to claim 1,
**characterized**
**in that** the service devices (OCANEQ) are included in the peripherals of a communications system.

3. Method according to claim 1,
**characterized**
**in that** the service devices are included in the network nodes of a telecommunications network.

4. Method according to claims 1 to 3,
**characterized**
**in that** the lists are updated in the course of administration of the telecommunications network or of the communications system.

5. Method according to claims 1 to 4,
**characterized**
**in that** the old data record is kept available until the initiation of the network-wide or switching-center-wide updating by the customer.

6. Method according to one of the preceding claims,
**characterized**
**in that** the data record is updated by those service devices (IP, OCANEQ), which initially have the new data record, in the course of a background process for successive updating of the other service devices (IP, OCANEQ) .

7. Method according to one of the preceding claims,
**characterized**
**in that** repeated cyclic updating attempts by the background process are carried out, if the service devices (IP, OCANEQ) to be updated are inaccessible or the attempts are unsuccessful.

8. Method according to one of the preceding claims,
**characterized**
**in that** use is made, when required, of connections which have been made temporarily between the service devices (IP, OCANEQ) in order to update the data records.

9. Method according to one of the preceding claims,
**characterized**
**in that** an update-specific communication takes place between the service devices (IP, OCANEQ) via a switching-center-internal message distribution system (MB) or, throughout the network, via ISDN user-to-user signaling, or switching-center internally and throughout the network via the Internet Protocol.

10. Method according to one of the preceding claims,
**characterized**
**in that** a number of data records are updated via one updating connection once it has been connected.

11. Method according to one of the preceding claims,
**characterized**
**in that** the updating format is defined in the course of the communication between the service devices (IP, OCANEQ).

12. Method according to one of the preceding claims,
**characterized**
**in that** the time required for updating is reduced by multiple channel connection and/or multiple starting of the background process.

13. Method according to one of the preceding claims,
**characterized**
**in that** a time stamp of the update by the customer is allocated, in order to prevent the current data record from being overwritten by older data records when a number of updating background processes are carried out at the same time.

14. Method according to one of the preceding claims,
**characterized**
**in that** explicit activation of the background processes of service devices (IP, OCANEQ) which are still in operation is carried out in order to update service devices (IP, OCANEQ) which are being taken back into operation again after repair, without delay and quickly.

## Revendications

1. Procédé pour mettre à jour des ensembles de données spécifiques aux abonnés, qui sont déposés de façon décentralisée dans un réseau de communication sur un grand nombre d'équipements de service (IP, OCANEQ),
**caractérisé en ce que**
on garantit de façon administrative qu'une liste des adresses des autres équipements de service (IP, OCANEQ), qui gèrent également cet ensemble de données, est gérée pour chaque ensemble de données stocké dans l'un des équipements de service (IP, OCANEQ),
**en ce que** chaque ensemble de données peut être contacté de façon uniforme au niveau du réseau et **en ce qu'**une modification, amorcée par le client, de l'ensemble de données s'effectue sur exactement un équipement de service (IP, OCANEQ) gérant l'ensemble de données et que cet équipement signale la modification au niveau du réseau aux autres équipements de service (IP, OCANEQ).

2. Procédé selon la revendication 1,
**caractérisé en ce que**
les équipements de service sont intégrés dans la périphérie d'un système de communication (OCANEQ).

3. Procédé selon la revendication 1,
**caractérisé en ce que**
les équipements de service sont intégrés dans les noeuds de réseau d'un réseau de commutation.

4. Procédé selon les revendications 1 à 3,
**caractérisé en ce que**
la mise à jour des listes intervient dans le cadre de l'administration du réseau de commutation resp. du système de communication.

5. Procédé selon les revendications 1 à 4,
**caractérisé en ce que**
la disponibilité de l'ancien ensemble de données existe jusqu'à l'amorçage de la mise à jour au niveau du réseau resp. au niveau du central par le client.

6. Procédé selon l'une quelconque des revendications précédentes,
**caractérisé en ce que**
l'actualisation de l'ensemble de données par les équipements de service (IP, OCANEQ), qui disposent d'abord du nouvel ensemble de données, intervient dans le cadre d'un processus de fond pour l'actualisation successive des autres équipements de service (IP, OCANEQ).

7. Procédé selon l'une quelconque des revendications précédentes,
**caractérisé en ce que**
des essais de mise à jour cycliques répétés du processus de fond interviennent en cas d'échec ou de non-accessibilité des équipements de service à actualiser (IP, OCANEQ).

8. Procédé selon l'une quelconque des revendications précédentes,
**caractérisé en ce que**
l'utilisation de liaisons commutées éventuellement de façon temporaire entre les équipements de service (IP, OCANEQ) intervient pour l'actualisation des ensembles de données.

9. Procédé selon l'une quelconque des revendications précédentes,
**caractérisé en ce que**
une communication spécifique à l'actualisation entre les équipements de service (IP, OCANEQ) intervient au moyen d'un système de répartition de messages (MB) interne au central ou bien au niveau du réseau via ISDN User-to-User Signalling ou de façon interne au central et au niveau du réseau via le protocole Internet.

10. Procédé selon l'une quelconque des revendications précédentes,
**caractérisé en ce que** l'actualisation de plusieurs ensembles de données est effectuée par une liaison d'actualisation commutée une seule fois.

11. Procédé selon l'une quelconque des revendications précédentes,
**caractérisé en ce que**
une fixation du format d'actualisation intervient dans le cadre de la communication entre les équipements de service (IP, OCANEQ).

12. Procédé selon l'une quelconque des revendications précédentes,
**caractérisé en ce que**
une réduction des besoins de temps d'actualisation est obtenue par une commutation multicanaux et/ou un démarrage multiple du processus de fond.

13. Procédé selon l'une quelconque des revendications précédentes,
**caractérisé en ce que**
la gestion commune d'un repère de temps de la mise à jour par le client intervient afin d'éviter l'écrasement de l'ensemble de données actuel par des ensembles de données plus anciens intervenant dans le cadre de plusieurs processus de fond qui effectuent une actualisation simultanée.

14. Procédé selon l'une quelconque des revendications précédentes,
**caractérisé en ce que**
une activation spécifique des processus de fond d'équipements de service (IP, OCANEQ) se trouvant encore en service est effectuée pour l'actualisation dans les meilleurs délais et rapide d'équipements de service (IP, OCANEQ) remis en service après la réparation.
